# EUROPÄISCHE PATENTANMELDUNG

(11) **EP 3 421 299 A1**
(43) Veröffentlichungstag der Anmeldung: **02.01.2019**
(21) Anmeldenummer: 17178779.9
(22) Anmeldetag: 29.06.2017
(51) Int. Cl.: B60R 13/02, B60R 13/06

(54) **RAHMENLEISTE MIT EINER WEICHMATERIALSTRUKTUR ZUR SPALTÜBERBRÜCKUNG**

(71) Anmelder: DURA Automotive Holdings U.K., Ltd., Birmingham, B35 7AG (GB)
(72) Erfinder: Schulze zur Wiesche, Jochen, 51143 Köln (DE)
(74) Vertreter: Bungartz Christophersen Partnerschaft mbB Patentanwälte

(57) **Zusammenfassung**

Bei einer Rahmenleiste, die im bestimmungsgemäß endmontierten Zustand oberseitig einer Säulenblende angeordnet ist und eine Zierleiste ausbildet oder trägt, die zur Säulenblende unter Bildung eines Spalts beabstandet ist, ist zur Bildung einer fertigungstechnisch einfach zu realisierenden und wenig Montageaufwand erfordernden optischen Spaltüberbrückung vorgesehen, dass eine von der Rahmenleiste ausgehende Weichmaterialstruktur eine sich in den Spalt zwischen Zierleiste und Säulenblende erstreckende Spaltüberbrückung ausbildet, die sich bei der Säulenblendemontage unter Verformung und/oder Verlagerung an den sich erst bei der Säulenblendenmontage ergebenden fahrzeugindividuellen Spalt anzupassen vermag.

## Beschreibung

Die Erfindung betrifft eine Rahmenleiste, insbesondere eine Fensterrahmenleiste, die eingerichtet ist, an einem oberen Rand einer einen Fensterrahmen einer Kraftfahrzeugtür bildenden Karosseriestruktur befestigt zu werden und die bei bestimmungsgemäß endmontierter Kraftfahrzeugtür in zumindest einem Teilbereich an den oberen Säulenblendenrand einer auf die Kraftfahrzeugtür aufgesetzten Säulenblende angrenzt, wobei die Rahmenleiste eine Weichmaterialstruktur umfasst.

Rahmenleisten dieser Art sind grundsätzlich bekannt. Sie werden bevorzugt an der den Fensterrahmen einer Fahrzeugtür bildenden Karosseriestruktur auf die Ränder des Karosserieblechs insbesondere klemmend oder formschlüssig haltend aufgesetzt. Sie bilden so einen randseitigen Abschluss der Fahrzeugtür und einen optischen Übergang zwischen angrenzendem Fahrzeugdach, Fensterscheibe und sonstigen angrenzenden Bauteilen wie etwa einer Säulenblende. Sie können ferner dem Tragen einer Zierleiste dienen, die beim fertigmontierten Kraftfahrzeug als Fensterrahmenzierleiste einen Zierrahmen um den oberen Fensterbereich bildet und typischerweise als von der Rahmenleiste trennbare Zierleiste aus einem anderen Material hergestellt und über Haltemittel an der Rahmenleiste gehalten ist.

Der sich am Übergang zwischen Säulenblende und Rahmenleiste unvermeidbar ausbildende Spalt ist aufgrund der auftretenden Toleranzketten und Bauteilmaße nur schwierig zu beherrschen, weil die zahlreichen in diesem oberen Türeckbereich vorgesehenen Bauteile (Türrahmen, Rahmenleiste, Dachstruktur, Fensterscheibe, Säulenblende, Fensterführungsdichtungen, usw.) und deren jeweilige Positionierung und Maßtolerierung sich gegenseitig beeinflussen. Insbesondere dieser obere Türeckbereich ist aber ein Bereich, der aufgrund der Tatsache, dass er sich bei jedem Ein- und Aussteigen eines Nutzers im unmittelbaren Sichtbereich befindet, hinsichtlich des Qualitätseindrucks besonderes kritisch ist.

Aus der europäischen Offenlegungsschrift EP 1 584 517 A2 ist es bekannt, eine zwischen einer Säulenblende und einer Zierleiste bestehende Lücke über eine an der Säulenblende vorgesehene Fugendichtung zu überbrücken, die an die Säulenblende angespritzt oder in einer U-förmigen Aufnahme gehalten ist. Die Anordnung einer derartigen Fugendichtung an der Säulenblende durch Anspritzen oder durch Aufnahme in einer an der Säulenblende vorzusehenden Aufnahmenut ist mit Blick auf die Fertigung und Montage unvorteilhaft.

Aus der Offenlegungsschrift US 2004/0006923 A1 ist es bekannt, einen Spalt, der sich zwischen einer Zierleiste und der angrenzenden Fahrzeugkarosserie ergibt, durch eine Dichtungslippe zu überbrücken, die an der Zierleiste oder an eine die Zierleiste tragenden und an der Karosserie zu befestigenden Struktur angeordnet ist. Zur Überbrückung eines Spaltes zwischen Zierleistenunterkante und einer hierzu benachbarten und auf die Karosseriestruktur aufgesetzten Säulenblende ist diese Konstruktion nicht geeignet.

Aufgabe der Erfindung ist es, eine Möglichkeit zur Verfügung zu stellen, einen Spalt, der sich bei einer endmontierter und mit Zierteilen, Blenden und Dichtungen fertig bestückten Kraftfahrzeugtür zwischen einem oberen Rand einer Säulenblende und dem unteren Rand einer Rahmenleiste notgedrungen ergibt, in fertigungstechnisch einfacher, wenig Montageaufwand erfordernder und optisch gefälliger Weise zu überbrücken.

Diese Aufgabe wird nach der Erfindung dadurch gelöst, dass die Weichmaterialstruktur der Rahmenleiste eine Spaltüberbrückung ausbildet, die sich bei bestimmungsgemäß endmontierter Fahrzeugtür in einen Spalt zwischen der Rahmenleiste oder einer auf der Rahmenleiste aufgesetzten Zierleiste und der Säulenblende erstreckt und die sich bei der Säulenblendemontage unter Anpassung an den sich erst bei der Säulenblendenmontage ergebenden Spalt zu verformen vermag und/oder deren Position oder Ausrichtung sich bei der Säulenblendemontage unter Anpassung an den sich erst bei der Säulenblendenmontage ergebenden Spalt zu ändern vermag.

Der Erfindung liegt unter anderem die Überlegung zugrunde, dass durch das Ausbilden einer Spaltüberbrückung mittels des einen Teil der Rahmenleiste bildenden Weichmaterials zum einen auf ein Anspritzen oder sonstiges Verbinden einer Fugendichtung mit der Säulenblende verzichtet werden kann, da die Spaltüberbrückung an der Rahmenleiste vorgesehen wird, und so der hiermit verbundene Fertigungs- und/oder Montageaufwand entfällt. Zum anderen ist durch die Ausgestaltung in besonders vorteilhafter Weise ein Toleranzausgleich ermöglicht. Die optische Überbrückung des zwischen Säulenblende und der Zierleiste erst bei der Säulenblendenmontage entstehenden Spalts ist dadurch ermöglicht, dass die Säulenblende bei der Montage gegen eine die Spaltüberbrückung bildenden Spaltüberbrückungsabschnitt angestellt wird und die Spaltüberbrückung sich so an die angrenzende Säulenblende unter Änderung von Form und/oder Lage anzulegen vermag. Hierbei kann sich die Spaltüberbrückung an den oberen Rand der Säulenblende anschmiegen, so dass optisch der Eindruck eines optimalen Sitzes der Bauteile zueinander entsteht und der Spalt, dessen Spaltmaß sich infolge der kaum zu beherrschenden Toleranzkette endgültig erst bei der Säulenblendenmontage fahrzeugindividuell ergibt, wirksam optisch geschlossen und somit ein guter Qualitätseindruck gewährleistet ist. Grundsätzlich ist natürlich - je nach Ausgestaltung der Rahmenleiste und der Weichmaterialstruktur - ebenfalls denkbar, dass erst die Säulenblende und dann die Rahmenleiste montiert wird.

Die Rahmenleiste kann insbesondere eine Zierleiste ausbilden oder zumindest eingerichtet sein, eine auf die Rahmenleiste aufzusetzende Zierleiste zu halten. Die Rahmenleiste kann insbesondere auch, alternativ oder zusätzlich hierzu, als Dichtungsprofil ausgebildet sein.

Die Rahmenleiste ist bevorzugt eine Fensterrahmenleiste, die auf die den oberen Rand der Kraftfahrzeugtür bildenden Karosseriebleche klemmend oder formschlüssig haltend aufsetzbar ist. Zur Realisierung eines Klemmsitzes weist die Rahmenleiste bevorzugt einen in der Weichmaterialstruktur vorgesehenen verstärkenden Klemmeinleger, insbesondere einen U-förmigen Stahleinleger, auf.

Die Weichmaterialstruktur der Rahmenleiste, die die Spaltüberbrückung ausbildet, bildet bevorzugt neben der Spaltüberbrückung auch weitere Funktionselemente wie Dichtlippen und/oder Halteglieder und/oder Klemmglieder und/oder Rastglieder aus. Die Dichtlippen können insbesondere Dichtlippen sein, über die der Spalt zur bei geschlossener Tür benachbarten Dachstruktur geschlossen und abgedichtet ist.

Klemmglieder können insbesondere innenliegend zu einem die Rahmenleiste verstärkenden Klemmeinleger angeordnet sein und dafür Sorge tragen, dass die Rahmenleiste in sicherer Weise reibschlüssig klemmend oder formschlüssig an der die Kraftfahrzeugtür bildenden Karosseriestruktur gehalten wird, indem die aufgrund des Weichmaterials einen hohen Reibungswert gewährleistenden Klemmglieder eng und fest an der Karosserie anliegen. Die Funktionselemente und die die Spaltüberbrückung ausbildende Weichmaterialstruktur sind dabei bevorzugt werkstoffeinstückig ausgebildet.

Besonders bevorzugt ist eine Ausgestaltung, bei der die Weichmaterialstruktur, die die Spaltüberbrückung ausbildet, dieselbe Weichmaterialstruktur ist, die auch Halteglieder aufweist, über die eine auf die Rahmenleiste aufgesetzte Zierleiste an der Rahmenleiste gehalten wird. Die die Spaltüberbrückung ausbildende Weichmaterialstruktur geht demnach werkstoffeinstückig in ein Halteglied über (und umgekehrt), das eingerichtet ist, eine auf die Rahmenleiste aufgesetzte Zierleiste an der Rahmenleiste zu halten. Es ist aber auch denkbar, dass die Rahmenleiste teilextrudiert ist. Insbesondere kann der Gesamtquerschnitt einen extrudierten Teilquerschnitt und einen bevorzugt an diesen extrudierten Teilquerschnitt angespritzten nicht extrudierten Querschnitt aufweisen. Insbesondere die die Spaltüberbrückung bildende Weichmaterialstruktur, gegebenenfalls auch weitere Teile der Weichmaterialstruktur wie Dichtlippen und/oder Halteglieder und/oder Klemmglieder und/oder Rastglieder, können an den extrudierten Teilquerschnitt der Rahmenleiste angespritzt sein.

Zur konstruktiven Realisierung der Spaltüberbrückung sind verschiedene Ausgestaltungen denkbar.

Allen Ausgestaltungen ist bevorzugt gemein, dass das konstruktiv festgelegte theoretische Nominalspaltmaß, das die Säulenblende zu dem nächst angrenzenden Bauteil aufweist (dies kann die Rahmenleiste oder eine auf die Rahmenleiste aufgesetzte Zierleiste sein), so gewählt wird, dass sich die Säulenblende in allen Toleranzlagen, insbesondere in ungünstigen Toleranzlagen, in der die Säulenblende dem nächsten Bauteil in z-Richtung maximal nahe kommt oder in der die Säulenblende von dem nächsten Bauteil in z-Richtung maximal entfernt ist, noch verbauen lässt. Damit die Spaltüberbrückung auch in den ungünstigen Toleranzlagen ihre spaltüberbrückende Aufgabe erfüllen kann, wird die Spaltüberbrückung so ausgebildet, dass sie eine Montage der Säulenblende weder behindert, weil sie dieser physisch im Wege stehen würde, noch funktionslos bleibt oder ihre bestimmungsgemäße Funktion nicht mehr erfüllen kann, weil sie bei der Montage der Säulenblende von dieser gar nicht mehr erfasst werden würde.

Bei einer ersten Ausgestaltung ist vorgesehen, dass die Spaltüberbrückung eine vom Weichmaterial ausgehende, sich in im Wesentlichen in z-Richtung im Spalt zum Säulenblendenrand hin erstreckende Überbrückungslippe aufweist, die über einen Anlenkpunkt an der Weichmaterialstruktur oder an einem extrudierten Teilquerschnitt der Rahmenleiste schwenkbar angelengt ist und die infolge der Säulenblendenmontage bzw. dem bestimmungsgemäßen Aufsetzen der Säulenblende auf die Türstruktur unter teilweisem Verbleib im Spalt in y-Richtung nach innen gedrängt wird. Hierzu ist die Länge L der Überbrückungslippe bevorzugt derart, dass die Länge L größer ist als das sich im ungünstigsten Toleranzfall ergebende Spaltmaß d des Spaltes zwischen Säulenblende und dem zur Säulenblende nächst angrenzenden Teil, insbesondere dem unteren Rand der Rahmenleiste oder dem unteren Rand einer auf die Rahmenleiste aufgesetzten Zierleiste. Bevorzugt entspricht die Länge L etwa dem zweifachen des Nominalspaltmaßes. Der infolge der Säulenblendenmontage nicht in y-Richtung von der Säulenblende optisch verdeckte Teil und innerhalb des Spalts verbleibende Teil der Überbrückungslippe überbrückt so einen Teil des sich bildenden Spaltes und ermöglicht, dass sich die Spaltüberbrückung erst bei der Säulenblendenmontage an die sich ergebende Spaltgeometrie bzw. an das sich ergebende Spaltmaß anpasst.

Um die Spaltüberbrückung optisch noch gefälliger auszugestalten, kann in einer zweiten bevorzugten Ausgestaltung vorgesehen sein, dass die Weichmaterialstruktur eine in den Spalt hineinragende zweischenklige Überbrückungslippe mit insbesondere L-förmigem Querschnitt ausbildet, der bevorzugt schwenkbar an ein einem Anlenkpunkt an der Weichmaterialstruktur oder an einem extrudierten Teilquerschnitt der Rahmenleiste angelenkt sein kann. Der bevorzugt L-förmige Querschnitt kann einen Anlageschenkel und einen Deckschenkel ausbilden und ist bevorzugt derart ausgerichtet, dass der obere Säulenblendenrand bei der Säulenblendenmontage insbesondere unterhalb des Anlenkpunktes mit dem Anlageschenkel in Anlage kommt und diesen in y-Richtung nach innen drängt (auf die Karosseriestruktur zu), während der vor der Säulenblendenmontage nach außen weisende Deckschenkel infolge des In-Anlage-Kommens und Nach-Innen-Drängens des Anlageschenkels ebenfalls nach innen schwenkt und sich als Deckschenkel außenseitig über den oberen Säulenblendenrand legt. Hierdurch ist eine optisch besonders effektive und einen hochwertigen Qualitätseindruck gewährleistende Spaltüberbrückung geschaffen. Auch bei dieser Ausführungsform ist die Länge L des Anlageschenkels bevorzugt derart, dass die Länge L größer ist als das sich im ungünstigsten Toleranzfall ergebende Spaltmaß d des Spaltes zwischen Säulenblende und dem zur Säulenblende nächst angrenzenden Teil, insbesondere dem unteren Rand der Rahmenleiste oder dem unteren Rand einer auf die Rahmenleiste aufgesetzten Zierleiste. Bevorzugt entspricht auch hier die Länge L des Anlageschenkels etwa dem zweifachen des Nominalspaltmaßes.

Der Querschnitt der Überbrückungslippe muss natürlich nicht streng L-förmig sein. Wesentlich ist, dass Anlageschenkel und Deckschenkel gemeinsam eine an der Weichmaterialstruktur angelengte Spaltüberbrückung derart ausbilden, dass ein Nach-Innen-Schwenken des Anlageschenkels ein Nach-Innen-Schwenken des Deckschenkels zur Folge hat.

Eine weitere Ausgestaltung kann vorsehen, dass die die Spaltüberbrückung ausbildende Weichmaterialstruktur ein Hohlkammerprofil mit einem Hohlprofilquerschnitt aufweist, gegen das die Säulenblende der bei der Säulenblendenmontage angestellt wird und das sich unter Anpassung an den sich bei der Säulenblendenmontage bildenden Spalt zu verformen vermag, wobei ein Teil des Hohlkammerprofils unter Bildung einer in den Spalt eindringenden Krümmung gegenüber dem Zustand vor der Säulenblendenmontage verformt ist. Ein Hohlprofilquerschnitt ist besonders vorteilhaft unter Bildung enger Radien verformbar, weil der die Wandung des Hohlprofils bildende Materialbereich typischerweise dünn ist, so dass die Wandung den sich ergebenden Spalt sehr effektiv auszufüllen vermag.

Den vorstehenden Ausgestaltungen gemein kann sein, dass sich die die Spaltüberbrückung ausbildende Weichmaterialstruktur bei bestimmungsgemäß endmontierter Kraftfahrzeugtür zumindest auch einen sich hinter den oberen Säulenblendenrand erstreckenden Stützschenkel ausbildet. So erstreckt sich die Weichmaterialstruktur nicht nur in den Spalt zwischen oberem Säulenblenderand und der Unterkante einer auf die Rahmenleiste aufgesetzten oder von dieser ausgebildeten Zierleiste, sondern auch in den Bereich zwischen Säulenblende und Türkarosserie, so dass die Weichmacherstruktur in der Lage ist, den oberen Säulenblendenrand gegenüber der Türkarosseriestruktur rückwärtig zu stützen, abzudichten und insbesondere auch zu beabstanden.

Das die Weichmaterialstruktur bildende flexibel verformbare Weichmaterial kann insbesondere Gummi oder ein gummiähnlicher Weichkunststoff sein (jeweils geschäumt oder ungeschäumt).

Zur Erfindung gehörig wird ebenfalls eine Anordnung einer vorstehend beschriebenen Rahmenleiste und einer Säulenblende an einer Kraftfahrzeugtür nach der vorstehend beschriebenen Art sowie Kraftfahrzeugtür mit einer solchen Anordnung angesehen.

Zusammenfassend ist bei einer Rahmenleiste, die im bestimmungsgemäß endmontierten Zustand oberseitig einer Säulenblende angeordnet ist und eine Zierleiste ausbildet oder trägt, die zur Säulenblende unter Bildung eines Spalts beabstandet ist, ist zur Bildung einer fertigungstechnisch einfach zu realisierenden und wenig Montageaufwand erfordernden optischen Spaltüberbrückung vorgesehen, dass eine von der Rahmenleiste ausgehende Weichmaterialstruktur eine sich in den Spalt zwischen Zierleiste und Säulenblende erstreckende Spaltüberbrückung ausbildet, die sich bei der Säulenblendemontage unter Verformung und/oder Verlagerung an den sich erst bei der Säulenblendenmontage ergebenden fahrzeugindividuellen Spalt anzupassen vermag.

Bevorzugte Ausführungsbeispiele der Erfindung werden nachfolgend anhand von Zeichnungen beschrieben.

In den Zeichnungen zeigt
- Fig. 1a: eine erste Ausgestaltung einer Rahmenleiste, die auf eine eine Kraftfahrzeugtür bildende Karosseriestruktur aufgesetzt ist und die eine Zierleiste trägt sowie eine nach unten auskragende Weichmaterialstruktur aufweist,
- Fig. 1b: das Zusammenspiel der Rahmenleiste aus Figur 1a mit einer auf die Kraftfahrzeugtür aufgesetzten Säulenblende,
- Fig. 2a: eine zweite Ausgestaltung einer Rahmenleiste, die auf eine eine Kraftfahrzeugtür bildende Karosseriestruktur aufgesetzt ist und die eine Zierleiste trägt sowie eine nach unten auskragende Weichmaterialstruktur aufweist,
- Fig. 2b: das Zusammenspiel der Rahmenleiste aus Figur 2a mit einer auf die Kraftfahrzeugtür aufgesetzten Säulenblende,
- Fig. 3a: eine dritte Ausgestaltung einer Rahmenleiste, die auf eine eine Kraftfahrzeugtür bildende Karosseriestruktur aufgesetzt ist und die eine Zierleiste trägt sowie eine nach unten auskragende Weichmaterialstruktur aufweist, und
- Fig. 3b: das Zusammenspiel der Rahmenleiste aus Figur 3a mit einer auf die Kraftfahrzeugtür aufgesetzten Säulenblende.

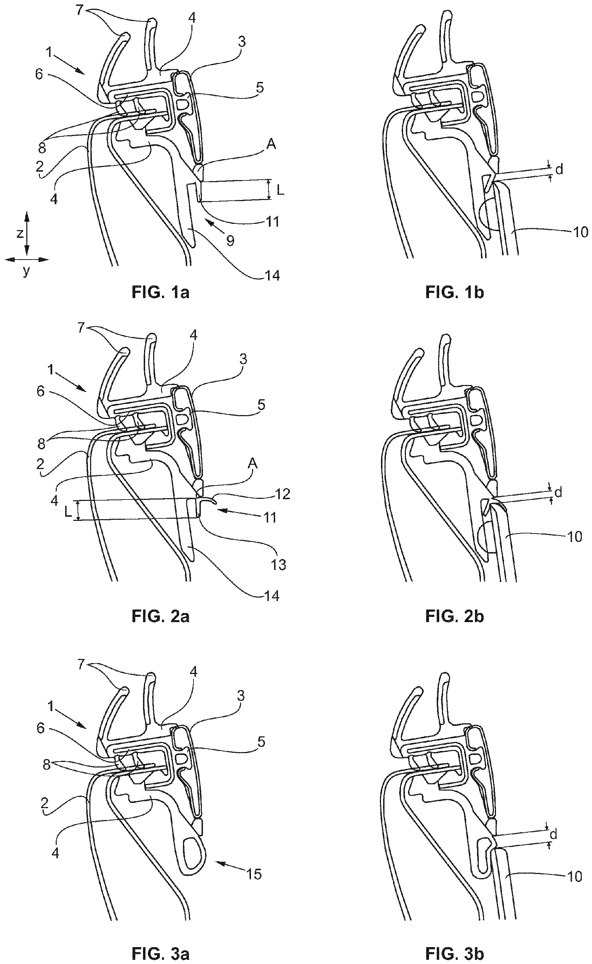

In Figur 1a ist eine Rahmenleiste 1 gezeigt, die auf eine eine Kraftfahrzeugtür bildende Karosseriestruktur 2 aufgesetzt ist und die eine Zierleiste 3 trägt sowie eine nach unten auskragende Weichmaterialstruktur 4 aufweist. Die Weichmaterialstruktur 4 bildet ein Haltemittel 5 aus, über das eine auf die Rahmenleiste 1 aufgesetzte Zierleiste 3 an der Rahmenleiste 1 gehalten ist. In der Rahmenleiste 1 bzw. in der die Rahmenleiste 1 mitbildenden Weichmaterialstruktur 4 ist ein Klemmeinleger 6 eingelegt, der die Rahmenleiste 1 strukturell verstärkt und der die für den sicheren Halt der Rahmenleiste 1 an der Karosseriestruktur 2 erforderliche Klemmwirkung gewährleistet.

Die Weichmaterialstruktur 4 der Rahmenleiste 1 bildet mit Dichtlippen 7, die bei beschlossener Tür den Spalt zu der die Fahrzeugtür oberseitig übergreifenden Dachkarosserie abdichten, und Klemmgliedern 8, die einen hohen Reibwert zwischen Rahmenleiste 1 und Karosseriestruktur 2 ermöglichen und hierdurch eine hohe Abziehkraft gewährleisten, weitere Funktionselemente aus. Die Weichmaterialstruktur 4 bildet außerdem einen sich in z-Richtung nach unten erstreckenden Spaltüberbrückungsabschnitts 9 aus, dessen obere Kante mit der auf der Rahmenleiste 1 aufgesetzten Zierleiste 3 in Anlage steht.

Die vorstehende Teilbeschreibung der in Figur 1a gezeigten Ausgestaltung ist auf alle weiteren Figuren uneingeschränkt übertragbar.

In Figur 1b ist derselbe Aufbau, wie er sich aus Figur 1a ergibt, gezeigt, wobei zusätzlich eine Säulenblende 10 auf die Karosseriestruktur 2 aufgesetzt ist. Die Säulenblende 10 dient als Zier- und Funktionsteil zum einen der optischen Überbrückung und Abdeckung von Spalten, technischen Funktionsteilen und blanken Karosserieteilen mittels einer nach außen sichtbaren Zierfläche. Zum anderen sind an der Säulenblende 10 typischerweise weitere Funktionsteile ausgebildet, über die etwa Fensterführungsprofile für Versenkscheiben gehalten werden.

Wie aus einer Zusammenschau von Figur 1a und Figur 1b erkennbar, wird eine von der Weichmaterialstruktur 4 ausgebildete und sich in z-Richtung von einem Anlenkpunkt A ausgehend nach unten erstreckende Überbrückungslippe 11 durch das Aufsetzen der Säulenblende 10 nach innen gedrängt. Die Länge L der Überbrückungslippe 11 ist derart bemessen, dass die Überbrückungslippe 11 beim Aufsetzen der Säulenblende 10 von dem oberen Säulenblendenrand unterhalb eines Anlenkpunktes A erfasst wird. Der sich bei der Säulenblendenmontage zwischen einem unteren Rand der Rahmenleiste und dem oberen Rand der Säulenblende 10 ergebende Spalt mit dem Spaltmaß d wirkt so effektiv in einer Weise optisch überbrückt, bei der sich die genaue Form der Spaltüberbrückung erst infolge des Aufsetzens der Säulenblende 10 auf die Karosseriestruktur 2 und somit fahrzeugindividuell einstellt. Bei der Bestimmung des Spaltmaßes d wird der Teil der Weichmaterialstruktur, der den Spalt letztlich überbrücken soll, selbstverständlich nicht mitberücksichtigt. In Figur 1a und Figur 1b ist dies die Überbrückungslippe 11 mit der Länge L. Gleiches gilt für die für die Überbrückung des Spalts bestimmungsgemäß vorgesehene Überbrückungslippe L in Figur 2a und Figur 2b sowie das Hohlkammerprofil 15 der in Figur 3a und 3b gezeigten Ausführungsvariante.

Die Figur 2a und die Figur 2b zeigen in zu Figur 1a und Figur 1b analoger Weise eine alternative Ausgestaltung einer von einer Weichmaterialstruktur 4 einer Rahmenleiste 1 ausgebildeten Spaltüberbrückung. Nachfolgend wird nur auf die Unterschiede eingegangen, die die in Figur 2a und Figur 2b gezeigte Ausgestaltung gegenüber der in Figur 1a und Figur 1b gezeigten Ausgestaltung aufweist.

Die Weichmaterialstruktur 4 bildet bei noch nicht aufgesetzter Säulenblende (Figur 2a) eine in den Spalt zwischen Zierleistenunterkante und Säulenblendenoberkante hineinragende mehrschenklige L-förmige Überbrückungslippe 11 mit einem Anlageschenkel 12 und einem zum Anlageschenkel 12 winklig abstehenden Deckschenkel 13 aus. Die Überbrückungslippe 11 ist über einen Anlenkpunkt A an der angrenzenden Weichmaterialstruktur schwenkbar und bevorzugt werkstoffeinstückig filmscharnierartig angelenkt.

Der Anlageschenkel 12 mit seiner Länge L ist derart bemessen und positioniert, dass die Säulenblende 10 beim Aufsetzen den Anlageschenkel 12 unterhalb des Anlenkpunktes A mit ihrem oberen nach innen weisenden Rand erfasst, während der Deckschenkel 13 derart vom Anlageschenkel 12 abgewinkelt ist, dass dieser von dem Rand der Säulenblende 10 bei der Säulenblendenmontage nicht erfasst wird. Infolge des Erfassens des Anlageschenkels 12 beim Aufsetzen der Säulenblende auf die Karosseriestruktur 2 und des damit verbundenen Nach-Innen-Schwenkens des Anlageschenkels 12 legt sich der mit dem Anlageschenkel 12 verbundene und daher mit diesem mitschwenkende Deckschenkel 13 außenseitig über den oberen Rand der Säulenblende 10. Infolge dessen entsteht der optisch besonders vorteilhafte Eindruck, dass der obere Rand der Säulenblende 10 in die der Rahmenleiste 1 zugehörigen Weichmaterialstruktur 4 eingebettet ist und der Bauteilübergang zur Säulenblende absolut passgenau ausgeführt ist.

Den in Figuren 1a und 1b sowie Figuren 2a und 2b gezeigten Ausführungsformen ist gemein, dass der die Spaltüberbrückung gewährleistende Spaltüberbrückungsabschnitt 9 der Weichmaterialstruktur 4 sich rückseitig der Säulenblende 10 mit einem Stützschenkel 14 zwischen Karosseriestruktur 2 und Säulenblendenrückseite erstreckt und die Säulenblende so zusätzlich rückseitig durch den Stützschenkel gegen die Karosseriestruktur 2 abgestützt und von dieser beabstandet ist.

Bei der in Figur 3a und Figur 3b gezeigten dritten Ausgestaltung bildet die Weichmaterialstruktur 4 an dem nach unten gerichteten Ende einen als Hohlkammerprofil 15 ausgeführten Spaltüberbrückungsabschnitt 9 aus, dessen dünne Wandung besonders leicht und unter Bildung enger Krümmungen verformbar ist. Infolge des Aufsetzens der Säulenblende 10 schmiegt sich der gegen die Säulenblende 10 Wandungsabschnitt des Hohlkammerprofils an die Außenkontur der Säulenblende 10 an und füllt mit einem im Spalt verbleibenden Wandungsabschnitt den Spalt zumindest teilweise optisch aus.

Allen in den Figuren gezeigten Ausgestaltungen ist gemein, dass eine Spaltüberbrückung geschaffen ist, die sich bei der Säulenblendemontage an das Spaltmaß und die Spaltgeometrie des sich erst bei der Montage fahrzeugindividuell ergebenden Spalts anzupassen vermag, indem die von einer Weichmaterialstruktur gebildete Spaltüberbrückung derart ausgebildet ist, dass diese sich verformen und/oder ihre Position oder Ausrichtung ändern kann.

### Bezugszeichenliste

- 1: Rahmenleiste
- 2: Karosseriestruktur
- 3: Zierleiste
- 4: Weichmaterialstruktur
- 5: Haltemittel
- 6: Stahleinleger
- 7: Dichtlippen
- 8: Klemmglieder
- 9: Spaltüberbrückungsabschnitt
- 10: Säulenblende
- 11: Überbrückungslippe
- 12: Anlageschenkel
- 13: Deckschenkel
- 14: Stützschenkel
- 15: Hohlkammerprofil
- A: Anlenkpunkt
- d: Spaltmaß
- L: Länge der Überbrückungslippe

## Patentansprüche

1. Rahmenleiste (1), die eingerichtet ist, an einer Karosseriestruktur (2) eines Kraftfahrzeugs befestigt zu werden und die bei bestimmungsgemäßer Montage an den oberen Säulenblendenrand einer auf die Karosseriestruktur (2) aufgesetzten Säulenblende (10) angrenzt, wobei die Rahmenleiste (1) eine Weichmaterialstruktur (4) umfasst, **dadurch gekennzeichnet, dass** die Weichmaterialstruktur (4) eine Spaltüberbrückung (11, 15) ausbildet, die sich bei bestimmungsgemäß endmontierter Fahrzeugtür in einen Spalt zwischen der Rahmenleiste (3) oder einer auf der Rahmenleiste (3) aufgesetzten Zierleiste und der Säulenblende (10) erstreckt und die sich bei der Säulenblendenmontage unter Anpassung an den sich erst bei der Säulenblendenmontage ergebenden Spalt zu verformen vermag und/oder deren Position oder Ausrichtung sich bei der Säulenblendemontage unter Anpassung an den sich erst bei der Säulenblendenmontage ergebenden Spalt zu ändern vermag.

2. Rahmenleiste nach dem vorhergehenden Anspruch, **dadurch gekennzeichnet, dass** die Rahmenleiste (1) auf die den oberen Rand der Kraftfahrzeugtür bildenden Karosseriestruktur (2) klemmend aufsetzbar ist.

3. Rahmenleiste nach einem der beiden vorhergehenden Ansprüche, **dadurch gekennzeichnet, dass** die die Spaltüberbrückung ausbildende Weichmaterialstruktur (4) neben der Spaltüberbrückung auch weitere Funktionselemente wie Dichtlippen (7) und/oder Halteglieder (5) und/oder Klemmglieder (8) ausbildet.

4. Rahmenleiste nach einem der vorhergehenden Ansprüche, **dadurch gekennzeichnet, dass** die die Spaltüberbrückung ausbildende Weichmaterialstruktur werkstoffeinstückig oder über eine stoffschlüssige Verbindung mit einem extrudierten Teilquerschnitt der Rahmenleiste in ein Halteglied (5) übergeht, das eingerichtet ist, eine auf die Rahmenleiste (1) aufzusetzende Zierleiste (3) an der Rahmenleiste (1) zu halten.

5. Rahmenleiste nach einem der vorhergehenden Ansprüche, **dadurch gekennzeichnet, dass** die Spaltüberbrückung eine von der Weichmaterialstruktur (4) oder an einem extrudierten Teilquerschnitt der Rahmenleiste ausgehende und sich zum Säulenblendenrand hin erstreckende Überbrückungslippe (11) aufweist, die infolge der Säulenblendenmontage nach innen gedrängt wird.

6. Rahmenleiste nach dem vorhergehenden Anspruch, **dadurch gekennzeichnet, dass** die Überbrückungslippe (11) an der Weichmaterialstruktur (4) oder an einem extrudierten Teilquerschnitt der Rahmenleiste über einen Anlenkpunkt A schwenkbar angelenkt und deren Länge L derart bemessen ist, dass die Säulenblende bei der Montage die Überbrückungslippe (11) unterhalb des Anlenkpunktes A erfasst.

7. Rahmenleiste nach dem vorhergehenden Anspruch, **dadurch gekennzeichnet, dass** nach erfolgter Säulenblendenmontage ein nicht von der Säulenblende (10) optisch verdeckter Teil der Überbrückungslippe (11) innerhalb des Spalts verbleibt.

8. Rahmenleiste nach eine der vorhergehenden Ansprüche 1 bis 6 in Verbindung mit Anspruch 5 oder mit Anspruch 6, **dadurch gekennzeichnet, dass** die Überbrückungslippe (11) mehrschenklig mit einem Anlageschenkel (12) und einen hierzu winklig stehenden Deckschenkel (13) ausgeführt ist.

9. Rahmenleiste nach dem vorhergehenden Anspruch, **dadurch gekennzeichnet, dass** Anlageschenkel (12) und Deckschenkel (13) gemeinsam eine an der Weichmaterialstruktur (4) oder an einem extrudierten Teilquerschnitt der Rahmenleiste angelengte Spaltüberbrückung derart ausbilden, dass ein Nach-Innen-Schwenken des Anlageschenkels (12) ein Nach-Innen-Schwenken des Deckschenkels (13) zur Folge hat.

10. Rahmenleiste nach einem der beiden vorhergehenden Ansprüche, **dadurch gekennzeichnet, dass** Anlageschenkel (12) und Deckschenkel (13) derart zueinander ausgerichtet sind, dass der Anlageschenkel (12) bei der Säulenblendenmontage von der Säulenblende (10) erfasst wird und sich der Deckschenkel (13) außenseitig an die Säulenblende (10) anlegt.

11. Rahmenleiste nach einem der Ansprüche 1 bis 4, **dadurch gekennzeichnet, dass** die Spaltüberbrückung ein Hohlkammerprofil (15) aufweist, gegen das die Säulenblende (10) der bei der Säulenblendenmontage angestellt wird und das sich unter Anpassung an den sich bei der Säulenblendenmontage bildenden Spalt zu verformen vermag.

12. Rahmenleiste nach dem vorhergehenden Anspruch, **dadurch gekennzeichnet, dass** das Hohlkammerprofil derart ausgebildet und positioniert ist, dass sich ein Teil der Wandung des Hohlkammerprofils (15) nach der Säulenblendenmontage unter Bildung einer in den Spalt eindringenden Krümmung zu verformen vermag.

13. Rahmenleiste nach einem der vorhergehenden Ansprüche, **dadurch gekennzeichnet, dass** sich die die Spaltüberbrückung ausbildende Weichmaterialstruktur (4) einen Stützschenkel (14) ausbildet, der sich bei bestimmungsgemäß endmontierter Säulenblende (10) hinter den oberen Säulenblendenrand erstreckt.

14. Anordnung einer Rahmenleiste (1) nach einer der vorhergehenden Ansprüche und einer Säulenblende (10) an eine Karosseriestruktur eines Kraftfahrzeugs.

15. Kraftfahrzeugtür mit einer Anordnung nach dem vorhergehenden Anspruch.
